# EUROPÄISCHE PATENTSCHRIFT

(11) **EP 0 941 281 B1**
(45) Veröffentlichungstag und Bekanntmachung des Hinweises auf die Patenterteilung: **29.01.2003**
(21) Anmeldenummer: 97950108.7
(22) Anmeldetag: 05.11.1997
(51) Int. Cl.: C08K 9/02, C08K 9/04, C08L 77/00, C08L 67/02, C08L 71/12

(54) **FLAMMGESCHÜTZTE THERMOPLASTISCHE FORMMASSEN**
FLAME RESISTANT THERMOPLASTIC MOULDING MATERIALS
MATIERES DE MOULAGE THERMOPLASTIQUE IGNIFUGEES

(30) Priorität: 22.11.1996 DE 19648503
(43) Veröffentlichungstag der Anmeldung: 15.09.1999
(73) Patentinhaber: BASF AKTIENGESELLSCHAFT, 67056 Ludwigshafen (DE)
(72) Erfinder: GAREISS, Brigitte, D-67271 Obersülzen (DE); KLATT, Martin, D-68165 Mannheim (DE); GÖRRISSEN, Heiner, D-67069 Ludwigshafen (DE)
(86) Internationale Anmeldenummer: EP9706119
(87) Internationale Veröffentlichungsnummer: WO98023676

(56) Entgegenhaltungen:
- EP-A- 0 638 608
- DATABASE WPI Section Ch, Week 8711 Derwent Publications Ltd., London, GB; Class A21, AN 87-075455 XP002060327 & JP 62 027 420 A (HITACHI CHEM CO LTD) , 5.Februar 1987

## Beschreibung

Die Erfindung betrifft thermoplastische Formmassen enthaltend
A) 5 bis 99 Gew.-% eines thermoplastischen Polymeren ausgewählt aus der Gruppe der Polyamide, Polyester, Polyphenylenether oder deren Mischungen,
B) 1 bis 60 Gew.-% roter Phosphor, welcher mit 0,01 bis 2 Gew.-%, bezogen auf 100 Gew.-% B), eines Phlegmatisierungsmittels und 2 bis 15 Gew.-% eines mineralischen Füllstoffes vorbehandelt wurde,
C) 0 - 70 Gew.-% weiterer Zusatzstoffe und Verarbeitungshilfsmittel,
wobei die Summe der Gewichtsprozente der Komponenten A) bis C) 100 % ergibt.

Weiterhin betrifft die Erfindung die Verwendung der erfindungsgemäßen Formmassen zur Herstellung von Fasern Folien und Formkörpern sowie die hierbei erhältlichen Formkörper.

Bei der Einarbeitung von rotem Phosphor in Polymerschmelzen bestehen aufgrund der Staubbildung und Phosphinentwicklung sicherheitstechnische Probleme.

Aus der DE-A 27 03 052 sind flammfeste thermoplastische Formmassen bekannt, in denen der rote Phosphor durch Zusatz von Aluminium- oder Nitrilotriessigsäure (NTE) stabilisiert wurde.

Die Metallionen bewirken jedoch eine Verschlechterung der elektrischen Eigenschaften der Kunststofformteile, wodurch sich die Anwendungsbreite dieser Formteile reduziert.

Aus der EP-A 71 788 sind Polyamidformmassen bekannt, in denen der rote Phosphor mit Trägerharzen aus Phenol/Isobutyraldehyd oder Cyclohexanon vor der Einarbeitung beschichtet wurde.

Weitere phenolische Formaldehydträgerharze als Phosphorbeschichtungsmittel sind aus der DE-A 27 45 076 bekannt.

Bei der Einarbeitung eines derartig vorbehandelten Phosphors in die Polymerschmelze werden die Trägerharze teilweise abgebaut. Das dabei entstehende Formaldehyd reagiert mit den Thermoplasten, wodurch sich die mechanischen Eigenschaften der daraus herstellbaren Formkörper allgemein verschlechtern.

Weiterhin sind aus der DE-A 24 08 488 Wachs oder wachsähnliche Substanzen als Trägermaterial für roten Phosphor bekannt.

Zusätzlich wird aus der DE-A 26 25 674 epoxygruppenhaltige Verbindungen als Trägerharze für roten Phosphor bekannt.

Diese Trägerharze sind jedoch schlecht verträglich mit den Thermoplasten, wodurch die Einarbeitung erschwert wird (Agglomeratbildung) und die geringe Haftung zu einer Verschlechterung der mechanischen Eigenschaften der daraus herstellbaren Formkörper führt.

Weiterhin sind aus der EP-A 176 836 und EP-A 384 232 Polyurethane oder Polyester-Polyurethane und in wasseremulgierbare organische Phlegmatisierungsmittel wie Dioctylphthalat zur Beschichtung des Phosphors bekannt.

Mineralische Füllstoffe als Zusätze in flammgeschützten Polyamiden sind u.a. aus der DE-A 25 51 718 bekannt.

Der vorliegenden Erfindung lag daher die Aufgabe zugrunde, leicht zugängliche flammgeschützte thermoplastische Polyamid- bzw. Polyphenylenether- bzw. Polyesterformmassen zur Verfügung zu stellen, die ein gutes Brandverhalten bei gleichzeitig guten mechanischen Eigenschaften aufweisen. Darüber hinaus war auch die thermische Stabilität der eingesetzten Phosphorflammschutzkombination in ausreichendem Maße zu gewährleisten.

Demgemäß wurden die eingangs definierten flammgeschützten Formmassen gefunden.

Bevorzugte Formmassen dieser Art und ihre Verwendung sind den Unteransprüchen zu entnehmen.

Überraschenderweise führt eine Kombination aus einem Phlegmatisierungsmittel mit einem mineralischen Füllstoff nicht nur zu einem stabilen phlegmatisierten Phosphor, sondern auch zu einem verbesserten Brandverhalten, so daß Formkörper mit sehr geringen Wandstärken sehr gute Flammschutzeigenschaften und eine hohe Phosphorstabilität zeigen.

Als Komponente (A) enthalten die erfindungsgemäßen Formmassen 5 bis 99, bevorzugt 20 bis 90 und insbesondere 20 bis 80 Gew.-% eines thermoplastischen Polyamids oder Polyesters oder Polyphenylenethers oder deren Mischungen.
Allgemein werden Polyester auf Basis von aromatischen Dicarbonsäuren und einer aliphatischen oder aromatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1.4-Cyclohexandiol, 1,4-Cyclohexandimethylanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat und Polybutylenterephthalat oder deren Mischungen bevorzugt.

Die Viskositätszahl der Polyester (A) liegt im allgemeinen im Bereich von 70 bis 220, vorzugsweise von 100 bis 150 (gemessen in einer 0,5 gew.-%igen Lösung in einem Phenol/o-Dichlorbenzolgemisch (Gew.-Verh. 1:1 bei 25°C).

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel I 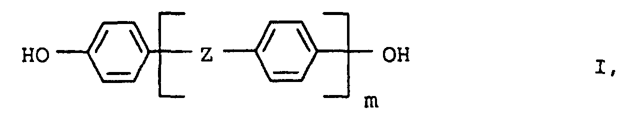 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen I können an den Phenylengruppen auch C₁-C₆-Alkyl- oder Alkoxygruppen und Fluor, Chlor oder Brom als Substituenten tragen.

Als Stammkörper dieser Verbindungen seien beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Unter Polyestern im Sinne der vorliegenden Erfindung sollen auch Polycarbonate verstanden werden, die durch Polymerisation von aromatischen Dihydroxyverbindungen, insbesondere Bis-(4-hydroxyphenyl)2,2-propan (Bisphenol A) oder dessen Derivaten, z.B. mit Phosgen erhältlich sind. Entsprechende Produkte sind an sich bekannt und in der Literatur beschrieben sowie größtenteils auch im Handel erhältlich. Die Menge der Polycarbonate beträgt bis zu 90 Gew.-%, vorzugsweise bis zu 50 Gew.-%, bezogen auf 100 Gew.-% der Komponente (A).

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Die Polyamide der erfindungsgemäßen Formmassen weisen im allgemeinen eine Viskositätszahl von 90 bis 350, vorzugsweise 110 bis 240 ml/g auf bestimmt in einer 0,5 gew.-%-igen Lösung in 96 gew.%iger Schwefelsäure bei 25°C auf gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der teilaromatischen Copolyamide mit niedrigem Triamingehalt kann nach den in den EP-A 129 195 und 129 196 beschriebenen Verfahren erfolgen.

Geeignete Polyphenylenether weisen im allgemeinen ein Molekulargewicht (Gewichtsmittelwert) im Bereich von 10 000 bis 80 000, vorzugsweise von 20 000 bis 60 000 und insbesondere von 40 000 bis 55 000 auf.

Die Molekulargewichtsverteilung wird im allgemeinen mittels Gelpermeationschromatographie (GPC) bestimmt. Hierzu werden PPE-Proben in THF unter Druck bei 110°C gelöst. Bei Raumtemperatur wird mit THF als Elutionsmittel 0,16 ml einer 0,25 %igen Lösung auf geeignete Trennsäulen injiziert. Die Detektion erfolgt allgemein mit einem UV-Detektor. Die Trennsäulen werden zweckmäßig mit PPE-Proben bekannter Molekulargewichtsverteilung geeicht.

Dies entspricht einer reduzierten spezifischen Viskosität η_{red} von 0,2 bis 0,9 dl/g, vorzugsweise von 0,35 bis 0,8 und insbesondere 0,45 bis 0,6, gemessen in einer 0,5 gew.%igen Lösung in Chloroform bei 25°C.

Die unmodifizierten Polyphenylenether a₁) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Die als Komponente a₁) verwendeten Polyphenylenether können gegebenenfalls verfahrensbedingte Fehlstellen enthalten, die beispielsweise bei White et al., Macromolecules 23, 1318-1329 (1990) beschrieben sind.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylen)ether, Poly(2,6-diphenyl-1,4-phenylen)ether, Poly(2,6-dimethoxi-1,4-phenylen)ether, Poly(2,6-Diethoxi-1,4-phenylen)ether, Poly(2-methoxi-6-ethoxi-1,4-phenylen)ether, Poly(2-ethyl-6-stearyloxi-1,4-phenylen)ether, Poly(2,6-dichlor-1,4-phenylen)ether, Poly(2-methyl-6-phenyl-1,4-phenylen)ether, Poly(2,6-dibenzyl-1,4-phenylen)ether, Poly(2-ethoxi-1,4-phenylen)ether, Poly(2-chlor-1,4-phenylen)ether, Poly(2,5-dibrom-1,4-phenylen)ether. Bevorzugt werden Polyphenylenether eingesetzt, bei denen die Substituenten Alkylreste mit 1 bis 4 Kohlenstoffatomen sind, wie Poly(2,6-dimethyl-1,4-phenylen(ether, Poly(2,6-diethyl-1,4-phenylen)ether, Poly(2-methyl-6-ethyl-1,4-phenylen) ether, Poly(2-methyl-6-propyl-1,4-phenylen)ether, Poly(2,6-dipropyl-1,4-phenylen)ether und Poly(2-ethyl-6-propyl-1,4-phenylen)ether.

Weiterhin sind Pfropfcopolymere aus Polyphenylenether und vinylaromatischen Monomeren wie Styrol, α-Methylstyrol, Vinyltoluol und Chlorstyrol geeignet.

Funktionalisierte oder modifizierte Polyphenylenether sind an sich bekannt, z.B. aus WO-A 86/02086, WO-A 87/00540, EP-A-222 246, EP-A-223 116 und EP-A-254 048 und werden bevorzugt für Mischungen mit PA oder Polyester eingesetzt.

Üblicherweise wird ein unmodifizierter Polyphenylenether a₁) durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit z.B. mit dem Polyamid gewährleistet ist.

Die Modifizierung wird im allgemeinen durch Umsetzung eines unmodifizierten Polyphenylenethers a₁) mit einem Modifiziermittel, das mindestens eine der oben genannten Gruppen und mindestens eine C-C-Doppel- oder C-C-Dreifachbindung enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel (a₃) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C₁- und C₂- bis C₈-Alkanolen (a₃₁), die Mono- oder Diamide dieser Säuren wie N-Phenylmaleinimid (Monomere a₃₂), Maleinhydrazid. Weiterhin seien beispielsweise N-Vinylpyrrolidon und (Meth)acryloylcaprolactam (a₃₃) genannt.

Bevorzugt wird in den erfindungsgemäßen Formmassen als Komponente A) ein modifizierter Polyphenylenether eingesetzt, der durch Umsetzen von
a₁) 70 bis 99,95, bevorzugt 76,5 bis 99,94 Gew.-% eines unmodifizierten Polyphenylenethers,
a₂) 0 bis 25, bevorzugt 0 bis 20 Gew.-% eines vinylaromatischen Polymeren,
a₃) 0,05 bis 5, bevorzugt 0,05 bis 2,5 Gew.-% mindestens einer Verbindung aus der Gruppe gebildet aus
   a₃₁) einer α,β-ungesättigten Dicarbonylverbindung,
   a₃₂) eines Amid-Gruppen enthaltenden Monomeren mit einer polymerisierbaren Doppelbindung und
   a₃₃) eines Lactam-Gruppen enthaltenden Monomeren mit einer polymerisierbaren Doppelbindung,
a₄) 0 bis 5, bevorzugt 0,01 bis 0,09 Gew.-% eines Radikalstarters,
wobei sich die Gewichtsprozente auf die Summe von a₁) bis a₄) beziehen, im Verlaufe von 0,5 bis 15 Minuten bei 240 bis 375°C in geeigneten Misch- und Knetaggregaten wie Zweischneckenextrudern erhältlich ist.

Das vinylaromatische Polymer a₂) soll vorzugsweise mit dem eingesetzten Polyphenylenether verträglich sein, wie vorstehend beschrieben.

Beispiele für bevorzugte, mit Polyphenylenethern verträgliche vinylaromatische Polymere sind der bereits erwähnten Monografie von Olabisi, S. 224 bis 230 und 245 zu entnehmen.

Als Radikalstarter a₄) seien genannt:
Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexöat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Di-tert.-butylperoxybutan, Dicumylperoxid, tert.-Butylcumylperoxid, 1,3-Di-(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Methylhydroperoxid und Pinanhyroperoxid sowie hochverzweigte Alkane der allgemeinen Struktur 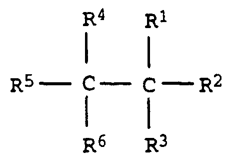 wobei R¹ bis R⁶ Alkylgruppen mit 1 bis 8 C-Atomen, Alkoxygruppen mit 1 bis 8 C-Atomen, Arylgruppen wie Phenyl, Naphthyl oder 5 - oder 6-gliedrige Heterocyclen mit einem π-Elektronensystem und Stickstoff, Sauerstoff oder Schwefel als Heteroatomen darstellen. Die Substituenten R¹ bis R⁶ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Besonders bevorzugte Polyphenylenether A) in den erfindungsgemäßen Formmassen werden durch Modifizierung mit Maleinsäure, Maleinsäureanhydrid und Fumarsäure erhalten. Derartige Polyphenylenether weisen vorzugsweise eine Säurezahl von 1,8 bis 3,2, insbesondere von 2,0 bis 3,0 auf.

Die Säurezahl ist ein Maß für den Modifizierungsgrad des Polyphenylenethers und wird im allgemeinen durch Titration mit Basen unter Inertgasbedingungen bestimmt.

Die Säurezahl entspricht allgemein der Menge an Base in mg, welche zur Neutralisation von 1 g eines derart säuremodifizierten Polyphenylenethers benötigt wird (nach DIN 53 402).

Es können auch Mischungen von Polyestern, Polyamiden und Polyphenylenethern eingesetzt werden. Bevorzugt werden Polyamide oder Polyester mit modifizierten Polyphenylenethern gemischt.

Aus Komponente B) enthalten die erfindungsgemäßen Formmassen 1 bis 60, vorzugsweise 1 bis 50 und insbesondere 5 bis 20 Gew.-% roten Phosphor, welcher mit 0,01 bis 2, vorzugsweise 0,1 bis 1,5 und insbesondere 0,4 bis 1,0 Gew.-% eines Phlegmatisierungsmittels und 2 bis 15, vorzugsweise 3 bis 10 und insbesondere 4 bis 8 Gew.-% eines mineralischen Füllstoffes vorbehandelt wurde.

Die Gewichtsprozentangaben des mineralischen Füllstoffes und des Phlegmatisierungsmittels sowie des roten Phosphors ergeben jeweils 100 Gew.-%.

Die mittlere Teilchengröße (d₅₀) der in den Formmassen verteilten Phosphorpartikel liegt üblicherweise im Bereich bis zu 2 mm, vorzugsweise von 0,0001 bis 0,5 mm.

Die Herstellung der Komponente B) erfolgt vorzugsweise durch
a) Zugabe des mineralischen Füllstoffes zu einer wässrigen alkalischen Phophorsuspension,
b) Umsetzung der Suspension mit einer wässrigen Emulsion des Phlegmatisierungsmittels und
c) anschließender Abtrennung der Lösungsmittel und Trocknen des Rückstandes.

Vorzugsweise enthält die wässrige Suspension bis zu 75 Gewichtsteile roten Phosphor, die wäßrige Emulsion bis zu 40 Gew.-% des als Phlegmatisierungsmittels dienenden Verbindung.

Der pH-Bereich der Phosphorsuspension beträgt in der Regel 6 - 9. Vorteilhaft wendet man eine Reaktionstemperatur von 20 bis 90, insbesondere 25 bis 85°C an.

Die Verweilzeit beträgt vorzugsweise 0,5 bis 3 Stunden, wonach der Phosphor abgetrennt wird und im Inertgastrom, z. B. Stickstoffstrom, bei Temperaturen von 80 bis 120°C getrocknet wird.

In der Regel kann der phlegmatisierte Phosphor in Pulverform leicht in die erfindungsgemäßen Formmassen eingearbeitet werden.

Außerdem sind Konzentrate von phlegmatisiertem Phosphor z.B. in einem Polyamid oder einem Elastomeren geeignet, welche Phosphorgehalte bis zu 60 Gew.-% aufweisen können.

Als mineralischen Füllstoff sind vorzugsweise Calcium- oder Magnesiumsilikate geeignet, wobei Wollastonit und Talkum bevorzugt sind.

Die mittlere Teilchengröße (d₅₀) beträgt üblicherweise von 1 bis 500 µm.

Geeignete Phlegmatisierungsmittel sind Mineralöle, Paraffinöle, Chlorparaffine, Ester der Trimellithsäure, vorzugsweise von Alkoholen mit 5 bis 10 C-Atomen wie Trioctyltrimellitat und aromatische Phosphatverbindungen wie beispielsweise Trikresylphosphat.

Besonders bevorzugt werden Ester der Phthalsäure als Phlegmatisierungsmittel eingesetzt, welche aus Phthalsäure und Alkoholen mit 6 bis 13 C-Atomen erhältlich sind. Insbesondere bevorzugt sind Dioctylphthalate, wobei Di-2-ethylhexylphthalat besonders bevorzugt ist.

Als Komponente C) können die erfindungsgemäßen Formmassen 0 bis 70, insbesondere bis zu 50 Gew.-% weiterer Zusatzstoffe und Verarbeitungshilfsmittel enthalten.

Übliche Zusatzstoffe sind beispielsweise in Mengen bis zu 40, vorzugsweise bis zu 30 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut:

R¹C(COOR²)=C(COOR³)R⁴ (I)

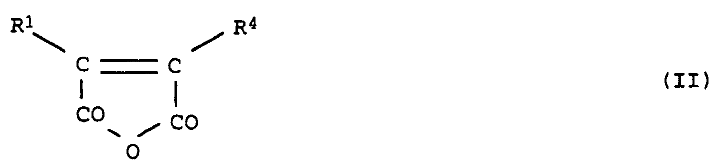

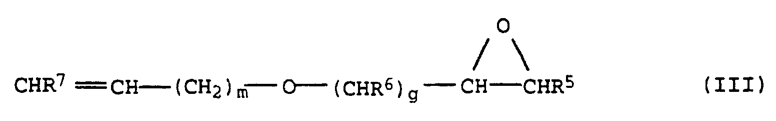

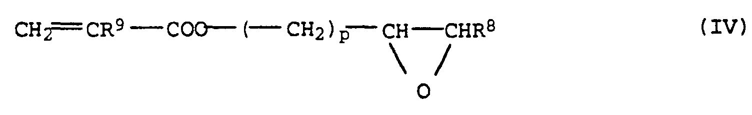

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/oder Maleinsäureanhydrid, und |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 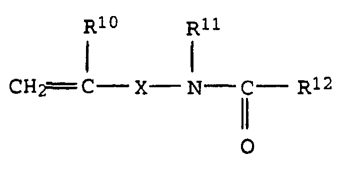 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 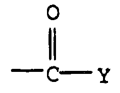
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate werden insbesondere zur Schlagzähmodifizierung von Mischungen aus PET und PBT eingesetzt. Entsprechende Blend-Produkte sind unter dem Warenzeichen Ultradur® S (ehemals Ultrablend® (BASF AG)) im Handel erhältlich. In Mischung mit Polycarbonaten sind derartige Blends unter dem Warenzeichen Terblend® der BASF AG erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/ (Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten-Kautschuktypen eingesetzt werden.

Als faserförmige Füllstoffe seien Kohlenstoffasern, Glasfasern, Glaskugeln, amorphe Kieselsäure, Asbest, Kaliumtitanatwhisker und Aramidfasern genannt, die in Mengen bis zu 50 Gew.-%, insbesondere bis zu 40 % eingesetzt werden.

Weiterhin können die erfindungsgemäßen thermoplastischen Formmassen Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen--auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid oder Siliziumdioxid eingesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) sowie Amidderivate (z.B. Ethylen-bisstearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Zur besseren Verträglichkeit mit dem thermoplastischen Polymeren sind Minerale und Füllstoffe gegebenenfalls mit einem Haftvermittler ausgerüstet. Bevorzugt sind Glycidyl-, Vinyl- und Aminoalkyltrialkoxysilane.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer bevorzugten Arbeitsweise können die Komponente B) sowie gegebenenfalls übliche Zusatzstoffe C) mit einem Polyamidoder Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch gute Flammschutzeigenschaften bei gleichzeitig guten mechanischen Eigenschaften aus. Insbesondere Formkörper mit geringer Wandstärke weisen eine Klassifizierung V-O oder V-1 gemäß UL 94 und eine bessere Phosphorstabilität auf. Die Formmassen eignen sich zur Herstellung von Fasern, Folien und Formkörpern, insbesondere für Anwendungen im Elektro- und Elektronikbereich. Diese Anwendungen sind insbesondere Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

### Beispiele

### 1. Herstellung der Komponente B)

500 ml einer wäßrig-alkalischen Phosphorsuspension mit einem Gehalt von 237,5 g rotem Posphor und 12,5 Wollastonit bzw. 12.5 g Talkum bzw. 250 g rotem Phosphor (Beispiel 3*) wurden auf 60°C erwärmt und durch Zugabe von 5%iger Schwefelsäure auf einen pH-Wert von 8 eingestellt.

In 100 g Di-2-ethylhexylphthalat (DOP) wurden 0,75 g eines Emulgators (Arkopal® N 090, Hoechst) eingerührt und unter Rühren 300 ml Wasser zugegeben.

Von der DOP-Emulsion wurden 7 ml in die oben beschriebene Phosphorsuspension zugegeben. Die Suspension wurde anschließend eine Stunde bei 60°C gerührt und danach filtriert. Der Filterrückstand wurde mit Wasser gewaschen und anschließend bei 100°C im Stickstoffstrom getrocknet.

### 2. Es wurden folgende Komponenten eingesetzt:

### Komponente A)

Polyamid 66 mit einer Viskositätszahl (VZ) von 152 ml/g (bestimmt als 0,5 gew.-%ige Lösung in 96 gew-%iger Schwefelsäure bei 25°C.

### Komponente B)

- Komponente B1:: Mischung aus 94,3 Gew.-% rotem Phosphor, 0,7 Gew.-% DOP, 5 Gew.-% Wollastonit
- Komponente B2:: Mischung aus 94,3 Gew.-% rotem Phosphor, 0,7 Gew.-% DOP, 5 Gew.-% Talkum
- Komponente B3: (zum Vergleich): Mischung aus 99,3 Gew.-% rotem Phosphor, 0,7 Gew.-% DOP

Die mittlere Teilchengröße (d₅₀) des Phosphors betrug 45 µm.

### Komponente C

- C1:: Ein Olefincopolymerisat aus:
59,8 Gew.-% Ethylen
35 Gew.-% n-Butylacrylat
4,5 Gew.-% Acrylsäure
0,7 Gew.-% Maleinsäureanhydrid
mit einem MFI von 10 g/10 min. bei 190°C und 2,16 kg Belastung.
- C2:: Glasfasern mit einem mittleren Durchmesser von 10 µm
- C3:: Zinkoxid

### 3. Herstellung der Formmassen:

Die Komponenten A) bis C) wurden auf einem Zweischneckenextruder (120 U/min; 30 kg/h) bei 280°C konfektioniert, verstrangt und im Wasserbad gekühlt sowie granuliert.

Für das Vergleichsbeispiel 4* wurde zusätzlich als Komponente C4 Wollastonit in gleichem Mengenanteil, bezogen auf A) bis C) bei der Konfektionierung wie üblich eingearbeitet und als Komponente B/3 eine phlegmatisierte Mischung aus rotem Phosphor mit 0,7 Gew.-% DOP eingesetzt.

Das Granulat wurde bei 80°C im Vakuum getrocknet und bei 280°C zu Normprüfkörpern auf einer Spritzgußmaschine verarbeitet.

Der Brandtest erfolgte nach UL 94 an 1/16 und 1/32-Zoll Prüfkörpern mit üblicher Konditionierung. Der E-Modul wurde gemäß DIN 53457 bestimmt.

Die Phosphorschädigungsrate (Anteile an löslichen Phosphorderivaten) wurde nach Lagerung der Formkörper in einem Wasserbad bei 60°C bestimmt, wobei nach 100 Tagen Wasserproben entnommen und der P-Gehalt bestimmt wurde.

Die Zusammensetzung der Formmassen und die Ergebnisse sind der Tabelle zu entnehmen.

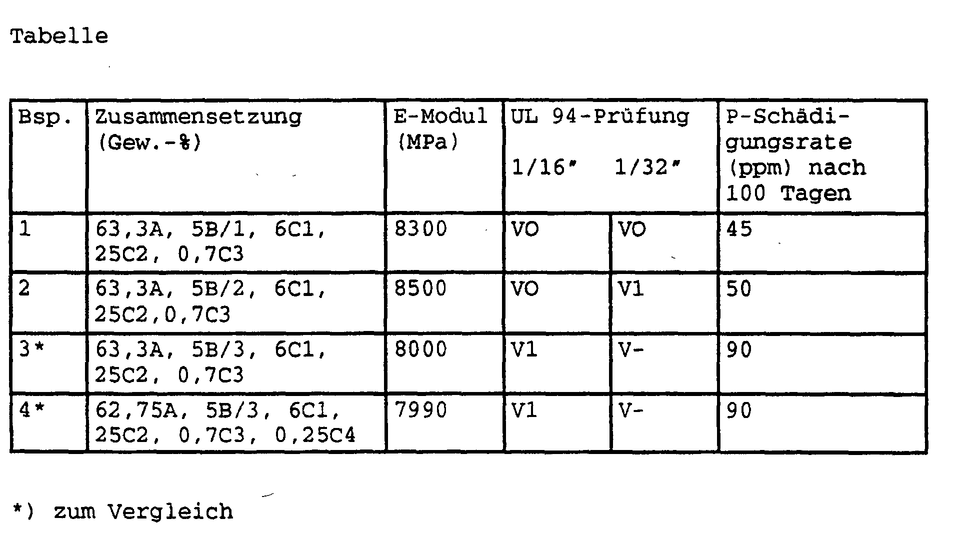

## Patentansprüche

1. Thermoplastische Formmassen enthaltend
A) 5 bis 99 Gew.-% eines thermoplastischen Polymeren ausgewählt aus der Gruppe der Polyamide, Polyester, Polyphenylenether oder deren Mischungen,
B) 1 bis 60 Gew.-% roter Phosphor, welcher mit 0,01 bis 2 Gew.-%, bezogen auf 100 Gew.-% B), eines Phlegmatisierungsmittels und 2 bis 15 Gew.-% eines mineralischen Füllstoffes vorbehandelt wurde,
C) 0 - 70 Gew.-% weiterer Zusatzstoffe und Verarbeitungshilfsmittel,
wobei die Summe der Gewichtsprozente der Komponenten A) bis C) 100 % ergibt.

2. Thermoplastische Formmassen nach Anspruch 1, enthaltend roten Phosphor, welcher mit, bezogen auf 100 Gew.-% B), 0,1 bis 1,5 Gew.-% eines Phlegmatisierungsmittels und 3 bis 10 Gew.-% eines mineralischen Füllstoffes vorbehandelt wurde.

3. Thermoplastische Formmassen nach den Ansprüchen 1 oder 2, in denen als Polyamid A) Polyamid 66, Polyamid 6 oder Polyamid 6/6T oder Polyamid 66/6T eingesetzt wird.

4. Thermoplastische Formmassen nach den Ansprüchen 1 bis 3, in denen das Phlegmatisierungsmittel aus Mineralölen, Paraffinenölen, Chlorparaffinen, Estern der Trimellithsäure, aromatischen Phosphaten, oder Phthalsäureestern oder deren Mischungen aufgebaut ist.

5. Thermoplastische Formmassen nach den Ansprüchen 1 bis 4, wobei der mineralische Füllstoff aus Wollastonit oder Talkum oder deren Mischungen besteht.

6. Thermoplastische Formmassen nach den Ansprüchen 1 bis 5, in denen die Komponente B) erhältlich ist durch
a) Zugabe des mineralischen Füllstoffes zu einer wässrigen alkalischen Phosphorsuspension,
b) Umsetzung der Suspension mit einer wässrigen Emulsion des Phlegmatisierungsmittels und
c) anschließender Abtrennung der Lösungsmittel und Trocknen des Rückstandes.

7. Verwendung der thermoplastischen Formmassen nach den Ansprüchen 1 bis 6, zur Herstellung von Fasern Folien und Formkörpern.

8. Formkörper erhältlich aus den thermoplastischen Formmassen gemäß den Ansprüchen 1 bis 6.

## Claims

1. A thermoplastic molding composition comprising
A) from 5 to 99% by weight of a thermoplastic polymer selected from the group consisting of polyamides, polyesters, polyphenylene ethers and mixtures of these,
B) from 1 to 60% by weight of red phosphorus which has been pretreated with from 0.01 to 2% by weight, based on 100% by weight of B), of a phlegmatizer and from 2 to 15% by weight of a mineral filler,
C) from 0 to 70% by weight of other additives and processing aids,
where the sum of the percentages by weight of components A) to C) is 100%.

2. A thermoplastic molding composition as claimed in claim 1, comprising red phosphorus which has been pretreated with from 0.1 to 1.5% by weight, based on 100% by weight of B), of a phlegmatizer and from 3 to 10% by weight of a mineral filler.

3. A thermoplastic molding composition as claimed in claim 1 or 2, in which the polyamide A) is nylon-6,6, nylon-6, nylon-6/6T or nylon-6,6/6T.

4. A thermoplastic molding composition as claimed in any of claims 1 to 3, in which the phlegmatizer is built up from mineral oils, paraffin oils, chloroparaffins, trimellitates, aromatic phosphates, phthalates, or mixtures of these.

5. A thermoplastic molding composition as claimed in any of claims 1 to 4, in which the mineral filler consists of wollastonite or talc or mixtures of these.

6. A thermoplastic molding composition as claimed in any of claims 1 to 5, in which B) is obtainable by
a) adding the mineral filler to an alkaline aqueous suspension of phosphorus,
b) reacting the suspension with an aqueous emulsion of the phlegmatizer and
c) then removing the solvent and drying the residue.

7. A method of using a thermoplastic molding composition as claimed in any of claims 1 to 6 for producing fibers, films or shaped articles.

8. A shaped article which can be obtained from the thermoplastic molding composition as claimed in any of claims 1 to 6.

## Revendications

1. Masses de moulage thermoplastiques, contenant:
A) 5 à 99% en poids d'un polymère thermoplastique choisi dans le groupe formé par des polyamides, des polyesters, des poly(éthers de phénylène), ou leurs mélanges,
B) 1 à 60% en poids de phosphore rouge, lequel est préalablement traité par 0,01 à 2% en poids, par rapport à 100% en poids de B), d'un agent de stabilisation (agent phlegmatisant) et 2 à 15% en poids d'une matière de remplissage minérale,
C) 0 à 70% en poids d'autres additifs et adjuvants de traitement,
la somme des pourcentages en poids des composants A) à C) totalisant 100%.

2. Masses de moulage thermoplastiques selon la revendication 1, contenant du phosphore rouge, lequel est préalablement traité par, par rapport à 100% en poids de B), de 0,1 à 1,5% en poids d'un agent de stabilisation et de 3 à 10% en poids d'une matière de remplissage minérale.

3. Masses de moulage thermoplastiques selon la revendication 1 ou 2, dans lesquelles l'on met en oeuvre en tant que polyamide A) du polyamide 66, du polyamide 6 ou du polyamide 6/6T ou du polyamide 66/6T.

4. Masses de moulage thermoplastiques selon les revendications 1 à 3, dans lesquelles l'agent de stabilisation est constitué d'huiles minérales, d'huiles paraffiniques, de chloroparaffines, d'esters de l'acide trimellitique, de phosphates aromatiques, ou d'esters de l'acide phtalique, ou leurs mélanges.

5. Masses de moulage thermoplastiques selon les revendications 1 à 4, dans lesquelles la matière de remplissage minérale consiste en wollastonite ou en talc, ou leurs mélanges.

6. Masses de moulage thermoplastiques selon les revendications 1 à 5, dans lesquelles le composant B) peut être obtenu par
a) addition de la matière de remplissage minérale à une suspension aqueuse alcaline de phosphore,
b) réaction de la suspension avec une émulsion aqueuse de l'agent de stabilisation et
c) séparation subséquente du solvant et séchage du résidu.

7. Utilisation des masses de moulage thermoplastiques selon les revendications 1 à 6 pour la préparation de fibres, de feuilles et de corps façonnés.

8. Corps façonnés que l'on peut obtenir à partir des masses de moulage thermoplastiques selon les revendications 1 à 6.
